# FASCICULE DE BREVET EUROPEEN

(11) **EP 4 297 566 B1**
(45) Date de publication et mention de la délivrance du brevet: **26.02.2025**
(21) Numéro de dépôt: 22710678.8
(22) Date de dépôt: 22.02.2022
(51) Int. Cl.: A01K 61/54, A01K 73/12

(54) **CAGE ANTI-PREDATEURS DE COQUILLAGES**
KÄFIG ZUM SCHUTZ VON SCHALENTIEREN VOR RAUBTIEREN
CAGE FOR PROTECTING SHELLFISH FROM PREDATORS

(30) Priorité: 23.02.2021 FR 2101750
(43) Date de publication de la demande: 03.01.2024
(73) Titulaire: Nodus Factory, 56000 Vannes (FR)
(72) Inventeur: LAURANT, Yves, 56000 Vannes (FR)
(74) Mandataire: Regimbeau
(86) Numéro de dépôt international: PCT/FR2022/050319
(87) Numéro de publication internationale: WO 2022/180336

(56) Documents cités:
- FR-A1- 2 944 948
- FR-A1- 2 945 410

## Description

### DOMAINE DE L'INVENTION

L'invention se situe dans le domaine de la culture de coquillages, et plus particulièrement de la mytiliculture.

La présente invention concerne une cage de protection contre les prédateurs de coquillages, configurée pour être disposée sur un support d'élevage de coquillages, notamment de moules.

### ETAT DE LA TECHNIQUE

Les attaques de prédateurs, tels que par exemple des canards, des goélands, des dorades et autres poissons, sont devenues un problème très fréquent sur les exploitations d'élevage de moules, que ces moules soient élevées sur des cordes suspendues, des filières ou sur des pieux, connus sous la dénomination "de bouchots".

Cette situation met en péril toute une filière, puisque les pertes économiques peuvent être très importantes. A titre d'exemple, un banc de dorades adultes peut engloutir jusqu'à 160 tonnes de moules en quelques minutes.

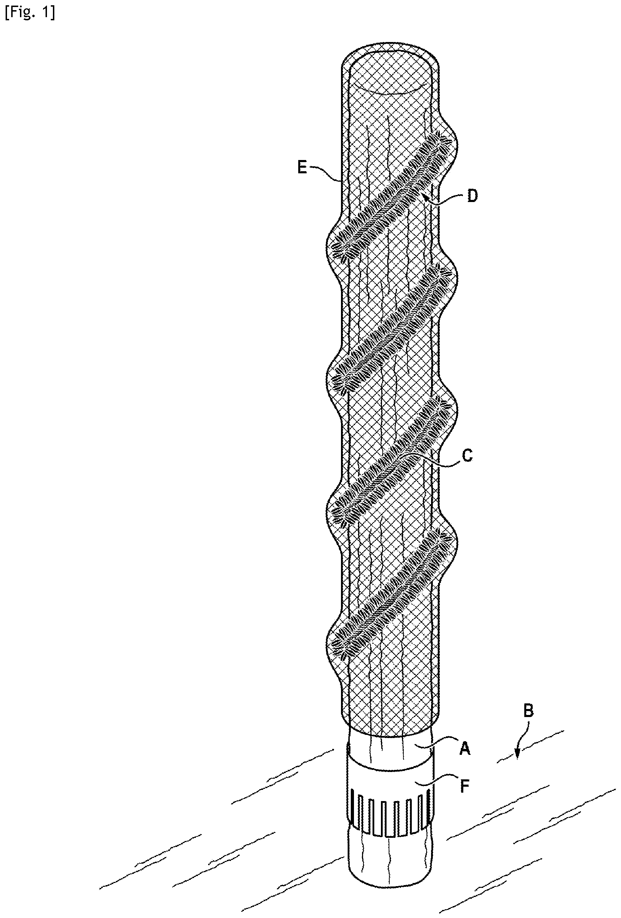

Comme on peut le voir sur la figure 1 jointe, pour réaliser l'élevage de moules sur pieu, un pieu A est planté verticalement ou sensiblement verticalement sur le fond marin B et une corde C, sur laquelle le naissain de moules D (c'est-à-dire les juvéniles) s'est développé, est enroulée en spirale autour du pieu. Cette corde C est ensuite fixée à ses deux extrémités, sur la partie haute du pieu et sur la partie basse de celui-ci, à une certaine distance du fond B.

Sur ce type d'élevage, on utilise actuellement comme moyen de protection contre les prédateurs, un filet souple E en forme de chaussette, qui est enfilé autour du pieu et de l'enroulement du naissain et qui vient se plaquer contre les moules en épousant la forme de l'enroulement.

En outre, pour protéger les moules des attaques des crabes, on dispose un dispositif F, connu sous le nom de "tahitienne", autour de la base du pieu A, au niveau de l'espace existant entre le fond B et l'extrémité inférieure de la corde C. Ce dispositif F consiste en une bande de matière plastique souple, découpée de façon à former une frange à sa partie inférieure. Il a pour but d'empêcher la progression des crabes le long du pieu A. Les filets souples F sont malheureusement fragiles et donc peu durables. Ils peuvent se rompre et sont donc une source de pollution pour le milieu marin. Ils doivent être renouvelés régulièrement, par exemple annuellement, ce qui est coûteux. Ils requièrent beaucoup de main d'oeuvre pour leur installation et doivent être nettoyés régulièrement pour rester efficaces.

Enfin, en fonction des courants marins, ces filets E peuvent même se déplacer et ne plus jouer leur rôle protecteur contre les prédateurs.

On connaît également d'après le document FR 2 589 323 un dispositif permettant l'obtention d'un naissain de coquillages, tels que des huitres, qui comprend un manchon tubulaire en treillis repliable en accordéon autour d'un support central. Toutefois, un tel dispositif ne comprend pas de couvercle de fermeture du filet muni de languettes déformables.

On connait enfin d'après le document CA 2 504 390 un dispositif de production de mollusques et de crustacés, qui comprend une pluralité de plateaux en treillis superposés, mais qui ne comprend pas de couvercle de fermeture du filet muni de languettes déformables.

### EXPOSE DE L'INVENTION

L'invention a donc pour but de résoudre les problèmes précités et notamment de proposer un dispositif de protection, qui soit à la fois efficace contre les prédateurs, solide, résistant aux chocs et qui soit simple et rapide à installer et à retirer.

A cet effet, l'invention concerne une cage de protection contre les prédateurs de coquillages, configurée pour être disposée sur un support d'élevage de coquillages, tel qu'un pieu, une corde ou une filière, ces coquillages étant notamment des moules.

Conformément à l'invention, cette cage comprend :
- un corps creux, allongé, à structure en treillis délimitant des ouvertures, telles que des mailles, dont les dimensions sont configurées pour empêcher l'action de prédation desdits prédateurs, ce corps creux étant ouvert à ses deux extrémités opposées, dites respectivement extrémité inférieure et extrémité supérieure,
- et deux dispositifs de fermeture du corps creux, l'un des deux dispositifs de fermeture étant fixé à l'extrémité inférieure du corps et l'autre dispositif à l'extrémité supérieure du corps,
chaque dispositif de fermeture étant configuré pour obturer au moins partiellement l'extrémité du corps creux tout en présentant une ouverture autorisant le passage dudit support d'élevage au travers de ce dispositif de fermeture et étant configuré pour permettre le centrage du corps creux par rapport à ce support d'élevage et le maintien de ce centrage, au moins l'un de ces dispositifs de fermeture comprenant un couvercle muni de découpes qui s'étendent radialement depuis son centre, de façon à former une pluralité de languettes déformables, ces languettes pouvant se déformer pour autoriser le passage du support d'élevage et pour pouvoir se plaquer contre celui-ci sur au moins une partie de leur longueur, afin d'assurer le centrage du corps creux par rapport audit support d'élevage et le maintien de ce centrage, ledit corps creux et les deux dispositifs de fermeture étant réalisés en matière plastique semi-rigide.

Grâce à ces caractéristiques de l'invention, la cage en matériau semi-rigide et dont les mailles empêchent l'accès des prédateurs est maintenue en position par rapport au pieu d'élevage.

Elle est simple à mettre en place et à retirer puisqu'il suffit de la faire coulisser verticalement par rapport au pieu en faisant passer ce pieu au travers des ouvertures ménagées dans chaque dispositif de fermeture.

Selon d'autres caractéristiques avantageuses et non limitatives de l'invention, prises seules ou en combinaison :
- le couvercle comprend une plaque munie sur sa périphérie d'une pluralité d'orifices permettant le passage de liens de fixation dudit couvercle sur l'extrémité inférieure et/ou l'extrémité supérieure du corps ;
- l'extrémité supérieure et/ou l'extrémité inférieure du corps creux est munie ou sont munies de découpes formant des rabats et en ce que ledit dispositif de fermeture est formé de ces rabats qui sont repliés vers l'intérieur du corps et maintenus en position repliée par des liens, les rabats étant dimensionnés et configurés pour qu'une fois repliés, ils ménagent entre eux une ouverture qui autorise le passage dudit support d'élevage et que leurs extrémités libres soient au contact de ce support d'élevage, afin d'assurer le centrage du corps creux par rapport audit support d'élevage;
- le corps creux est de section transversale carrée et présente quatre parois latérales ;
- chaque paroi latérale présente une largeur comprise entre 35 cm et 45 cm, de préférence égale à 40 cm ;
- les mailles du corps sont en forme de losange ou de carré dont l'une des diagonales présente une longueur comprise entre 14 mm et 40 mm et dont l'autre diagonale présente une longueur comprise entre 14 mm et 40 mm ;
- la cage est munie d'au moins une poignée de préhension ;
- la matière plastique semi-rigide est un matériau à mémoire de forme ;
- la matière plastique semi-rigide est du polyéthylène haute densité.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] est un schéma représentant un dispositif de protection contre les prédateurs de moules cultivées sur pieu (bouchot), selon l'état de la technique.
[Fig. 2] est une vue éclatée de la cage de protection selon un premier mode de réalisation de l'invention.
[Fig. 3] est une vue de dessus de la cage de la figure 2.
[Fig. 4] est une vue schématique d'un mode de réalisation possible d'une maille du corps de la cage de protection.
[Fig. 5] est une vue en perspective du couvercle de la cage selon le premier mode de réalisation de l'invention de la figure 2.
[Fig. 6] est une vue en perspective et de dessus d'une partie de la cage de la figure 2.
[Fig. 7] est une vue en perspective de la cage de protection selon un deuxième mode de réalisation de l'invention.

### DESCRIPTION DETAILLEE DE L'INVENTION

La cage de protection 1 conforme à l'invention est destinée à être installée sur un support d'élevage de coquillages, notamment de moules. Ce support d'élevage est référencé A. Ce support d'élevage est par exemple un pieu comme représenté sur la figure 1 et dans la suite de la description, il sera décrit comme tel. Un tel pieu ou "bouchot" présente généralement un diamètre compris entre 10 cm et 20 cm, de préférence 15 cm. Toutefois, ce support d'élevage pourrait également être une corde ou filière, qui est soit suspendue verticalement, soit disposée horizontalement ou sensiblement horizontalement entre deux poteaux. A titre d'exemple, de telles cordes ou filières ont un diamètre de l'ordre de 30 mm à 40 mm.

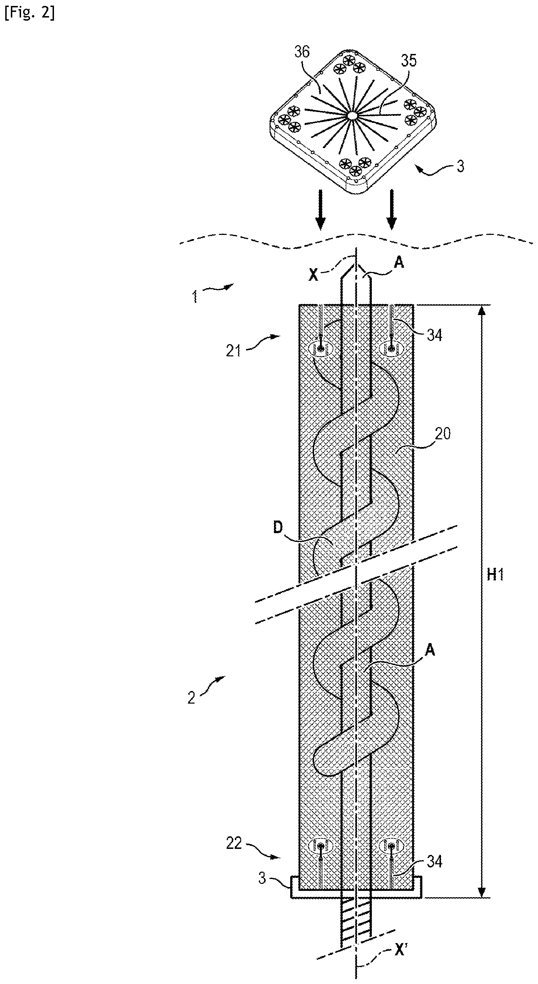

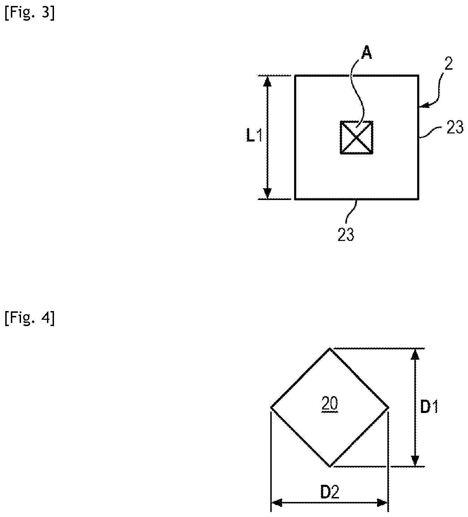

Un premier mode de réalisation de l'invention va maintenant être décrit en faisant référence aux figures 2 et 3.

La cage de protection 1 conforme à l'invention comprend un corps 2 et deux dispositifs de fermeture 3 de ce corps 2.

Le corps 2 est un manchon creux et allongé, d'axe longitudinal X-X'. Il est formé d'une structure en treillis délimitant des ouvertures 20. Cette structure ajourée permet ainsi le passage de flux d'eau, chargés en nutriments en direction des coquillages élevés sur le pieu A.

Le corps 2 est réalisé en matière plastique semi-rigide, comme cela sera décrit ultérieurement.

Les ouvertures 20 sont de préférence des mailles.

Ces mailles 20 sont dimensionnées pour empêcher l'action de prédation des prédateurs, notamment les canards, les goélands, les dorades et autres poissons. Par "empêcher l'action de prédation des prédateurs", on entend le fait de pouvoir les empêcher d'accéder aux coquillages en passant notamment leur tête, leur bec ou leur gueule au travers des mailles.

Les mailles 20 peuvent par exemple être en forme de carré ou de losange. A titre indicatif, et comme représenté sur la figure 4, l'une des diagonales D1 de la maille présente une longueur comprise entre 14 mm et 40 mm, de préférence comprise entre 20 mm et 30 mm, de préférence encore de l'ordre 25 mm et l'autre diagonale D2 présente une longueur comprise entre 14 mm et 40 mm, de préférence comprise entre 20 mm et 30 mm, de préférence encore de l'ordre 25 mm. Si la maille est carrée les deux diagonales sont de mêmes longueurs.

Comme cela apparait mieux sur la figure 3, ce corps 2 est ouvert à ses deux extrémités. Le corps 2 présente une extrémité supérieure 21 et une extrémité inférieure 22 opposée, les termes "supérieure" et "inférieure" étant à prendre en considération par rapport à la position normale d'utilisation de la cage, qui est celle représentée sur la figure 2.

De préférence, le corps 2 présente une section transversale carré avec quatre parois latérales 23. Cette forme permet de limiter la déformation du corps en cas de choc par exemple par un bateau.

D'autres formes sont envisageables. Le corps 2 pourrait ainsi présenter une section circulaire.

Le dispositif de fermeture 3 est un couvercle destiné à venir coiffer les deux extrémités 21, 22 du corps 2.

Le couvercle 3 présente une forme correspondant à celle de la section transversale du corps 2, pour pouvoir obturer l'extrémité du corps 2 sur laquelle il est placé. Dans l'exemple de réalisation représenté sur les figures 2 et 4, ce couvercle 3 est carré.

Ce couvercle 3 présente une plaque carrée 31, bordée d'un rebord périphérique 32.

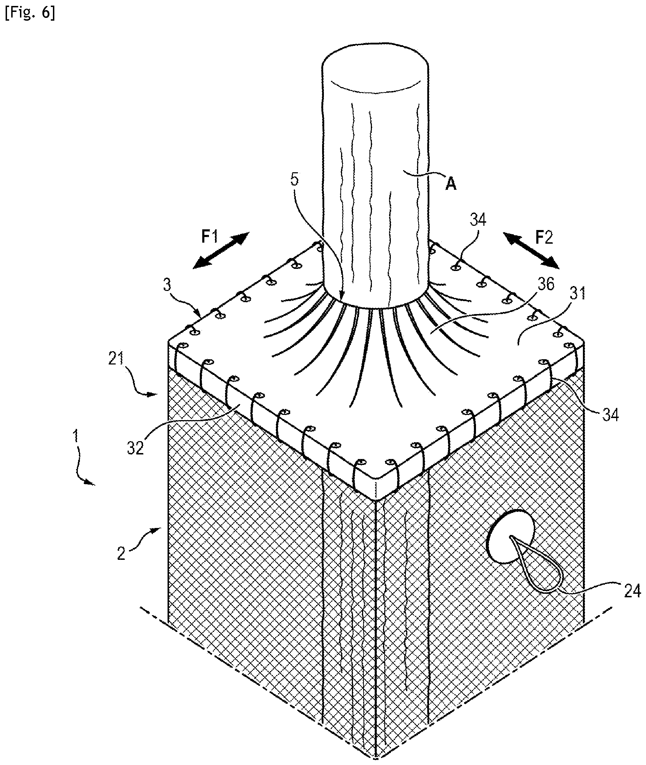

En outre, la plaque 31 est munie d'une pluralité d'orifices traversants 33, disposés avantageusement tout autour de sa périphérie, ces orifices 33 permettant l'introduction de liens 34 de fixation du couvercle 3 sur les extrémités 21, 22 du corps 2. Ces liens 34 passent par exemple dans les mailles 20, (voir figure 6).

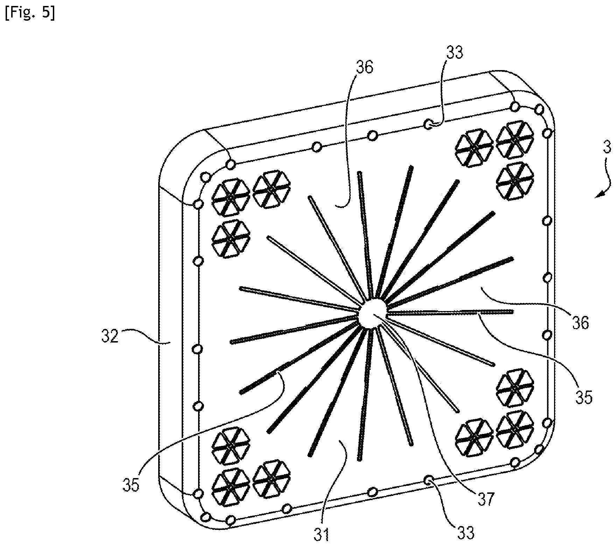

En outre, comme on peut le voir sur la figure 5, ce couvercle 3 (notamment la plaque 31) est muni d'une pluralité de découpes 35 qui s'étendent radialement depuis son centre. Ces découpes 35, de préférence rectilignes, délimitent ainsi entre elles des languettes 36. De plus, de façon avantageuse, le couvercle 3 peut présenter une ouverture centrale 37 de faibles dimensions au point d'intersection des différentes découpes 35.

Lorsque le couvercle 3 est fixé à l'extrémité du corps 2, la plaque 31 s'étend perpendiculairement ou sensiblement perpendiculairement aux parois latérales 23 et son centre est situé sur l'axe X-X'.

Le couvercle 3 est également réalisé en matière plastique semi-rigide. La combinaison de l'utilisation de cette matière avec la forme des découpes 35 fait que les languettes 36 sont déformables tout en conservant une certaine rigidité.

La figure 6 illustre la cage de protection 1 lorsqu'elle est insérée sur le pieu A par coulissement vertical de haut en bas. Les languettes 36 se courbent et s'écartent vers l'extérieur de fait de la présence du pieu A et restent plaquées sur au moins une partie de leur longueur contre la circonférence de celui-ci. En s'écartant ces languettes 36 délimitent une ouverture 5 pour le passage du pieu A.

Ce couvercle 3 permet donc à la fois :
- d'obturer l'extrémité du corps 2 par la plaque 31,
- d'autoriser le passage du pieu A au travers de l'ouverture 5,
- et de centrer le corps creux 2 par rapport à ce pieu A grâce aux languettes 36.

En effet, pour ce dernier point, les languettes 36 qui sont à la fois déformable mais réalisées dans un matériau semi-rigide limitent voire même empêchent les mouvements transversaux de la cage 2 par rapport au pieu, ces mouvements transversaux étant représentés par les flèches F1 et F2 en figure 6. Ainsi, les parois 23 de la cage 2 restent à distance des moules disposées sur le pieu A, puisque la cage 1 se trouve centrée, ce qui favorise également le maintien à distance des prédateurs.

De préférence, également la largeur L1 d'une paroi latérale 23 est suffisante pour que, une fois la cage 1 mise en place sur le pieu A, les différentes parois latérales 23 de la cage 1 ne touchent pas les moules, y compris lorsque celles-ci ont atteint leur taille adulte. Cette mise à distance des parois de la cage 1 vis-à-vis des moules renforce encore l'action de protection de la cage vis-à-vis des prédateurs.

De préférence, la largeur L1 d'une paroi latérale 23 est comprise entre 35 cm et 45 cm, de préférence égale à 40 cm.

Par ailleurs, de préférence la hauteur H1 du corps 2 est adaptée à la hauteur moyenne des élevages de coquillages enroulés autour du pieu A. A titre d'exemple H1 est de préférence compris entre 3m et 4m.

De façon avantageuse également la cage 1 présente une ou plusieurs poignées de manipulation 24, fixée par exemple sur le corps 2, (une seule poignée étant visible sur la figure 6). Une telle poignée peut par exemple être une sangle textile.

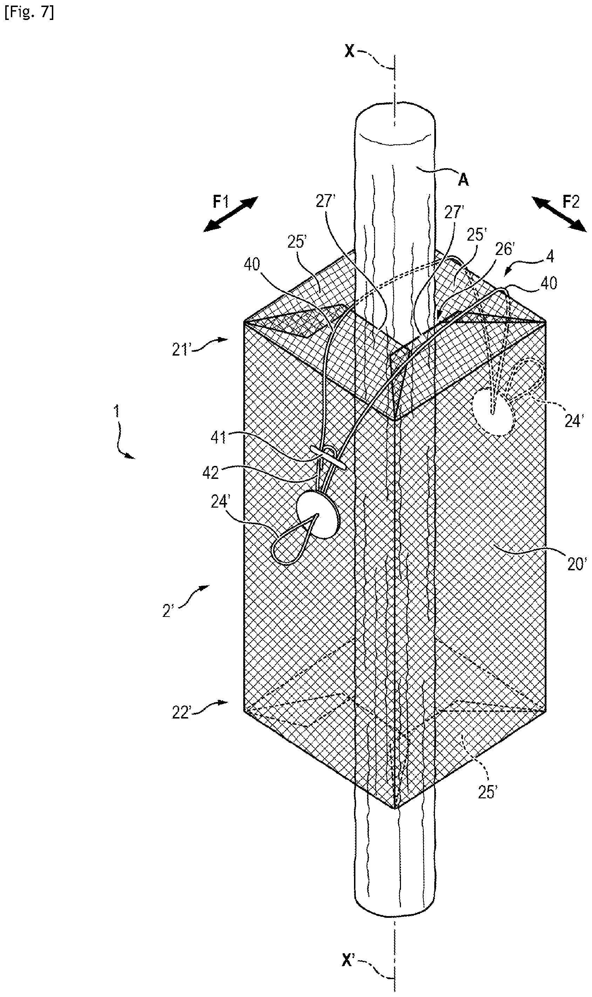

Un deuxième mode de réalisation de l'invention va maintenant être décrit en liaison avec la figure 7.

Dans ce cas, la cage de protection 1, comprend un corps 2' et le dispositif de fermeture du corps 2' n'est plus un couvercle 3 mais des rabats.

Les parties du corps 2' qui sont communes au corps 2 portent les mêmes références majorées du signe prime et ne seront pas de nouveau décrites en détail.

Ainsi, le corps 2' comprend une extrémité supérieure 21', une extrémité inférieure 22', des mailles 20', des parois latérales 23' et une ou plusieurs poignées 24'.

En outre, l'extrémité supérieure 21' et/ou l'extrémité inférieure 22' du corps creux 2' est (sont) munie(s) de découpes formant des rabats 25', par exemple quatre rabats 25'.

Les rabats 25' sont repliés vers l'intérieur du corps 2' (en direction de son axe central X-X') et sont maintenus en position repliée par un ou plusieurs liens 4.

A titre d'exemple purement illustratif, le lien 4 peut présenter deux brins 40 qui sont fixés chacun à l'une de leurs premières extrémités sur le corps 2' et dont les deux autres extrémités se rejoignent et sont fixées sur un élément de couplage 41. Cet élément de couplage 41 en forme de barrette allongée peut être engagée dans une boucle 42 fixée sur la face du corps 2' opposée à celle sur laquelle sont fixées les premières extrémités des brins 40. Les rabats 25' sont ainsi maintenus en position repliée.

Cet ensemble de rabats 25' et de lien 4 joue le même rôle que le couvercle 3, à savoir :
- d'obturer l'extrémité du corps 2' puisque les rabats 25' munis de mailles 20' empêchent l'accès des prédateurs,
- d'autoriser le passage du pieu A entre les rabats 25',
- et de centrer le corps creux 2' par rapport à ce pieu A.

A cet effet, les rabats 25' sont dimensionnés et configurés pour qu'une fois repliés, ils ménagent entre eux une ouverture centrale 26' autorisant le passage du pieu A et pour que leurs extrémités libres 27' (leurs bords) soient au contact du pieu A. Compte-tenu de la semi-rigidité de la matière plastique qui constitue ce corps 2', et du fait que les extrémités 27' sont au contact du pieu, les mouvements latéraux (flèches F1 et F2) de la cage 1 par rapport à ce pieu A sont limités, voire empêchés. Cette extrémité 27' peut en outre éventuellement se replier légèrement (comme une languette 36) pour que le rabat 25' soit plaqué contre le pieu A, sur une partie de sa longueur (prise de la paroi 23' jusqu'à l'extrémité libre 27').

Bien que cela ne soit pas représenté sur les figures, il serait également possible d'avoir un corps muni d'un couvercle 3 à l'une de ses extrémités et de rabats 25' à son autre extrémité.

Quelle que soit le mode de réalisation de la cage 1, on notera que sa mise en place ou son retrait est aisé puisqu'il suffit de la faire coulisser autour du pieu. En outre, la présence du dispositif de fermeture positionné à la partie inférieure du corps 2, 2' permet de façon avantageuse de récupérer les moules qui se seraient détachées de la corde C sur laquelle elles étaient initialement fixées. Ce même dispositif de fermeture inférieur permet de se dispenser de l'usage de la tahitienne F de l'art antérieur, puisqu'il empêche également l'accès des crabes.

De façon avantageuse, la matière plastique semi-rigide utilisée pour la fabrication du corps 2, 2' et des couvercles 3 est un matériau à mémoire de forme.

La nature à mémoire de forme de ce matériau permet de préformer le corps 2, 2' de la cage 1 à chaud sur un gabarit pour lui donner sa section, notamment sa section carrée et permet de le plier à plat en rapprochant l'une de ses arêtes de l'arête diamétralement opposée. Ceci permet un encombrement de stockage réduit.

Le caractère semi-rigide du matériau lui apporte à la fois la raideur suffisante pour la mise en place de la cage et la souplesse suffisante pour encaisser les coups de mer sans être détruit.

De préférence, ce matériau est un polymère thermoplastique, de préférence encore du polyéthylène haute densité. Ce type de matériau a l'avantage de présenter une très bonne résistance mécanique, une très bonne résistance aux UV, d'être insensible au milieu marin, d'être quasiment incassable, résistant aux chocs et à l'abrasion même à froid.

De plus, il est inerte chimiquement et non toxique pour un usage alimentaire et empêche la formation d'algues. Enfin il est recyclable.

On notera que, quel que soit le type de dispositif de fermeture, les languettes 26 ou les rabats 25' constituent des éléments de positionnement de la cage qui jouent le rôle d'entretoises entre les parois 23 du corps 2, 2' de la cage et le support d'élevage A du fait de la rigidité apportée par le matériau semi-rigide. De plus, ces éléments de positionnement 26 ou 25', du fait qu'ils conservent une certaine souplesse apportée par le matériau semi-rigide, peuvent se déformer plus ou moins pour autoriser la mise en place et le retrait de la cage 1 sur le support d'élevage A et s'adapter aux différentes dimensions des supports d'élevage A, suivant que ceux-ci sont des pieux, des cordes ou des filières.

## Revendications

1. Cage (1) de protection contre les prédateurs de coquillages, configurée pour être disposée sur un support d'élevage de coquillages, tel qu'un pieu, une corde ou une filière, ces coquillages étant notamment des moules, **caractérisée en ce qu'**elle comprend :
- un corps (2, 2') creux, allongé, à structure en treillis délimitant des ouvertures, telles que des mailles (20, 20'), dont les dimensions sont configurées pour empêcher l'action de prédation desdits prédateurs, ce corps creux (2, 2') étant ouvert à ses deux extrémités opposées, dites respectivement extrémité inférieure (22, 22') et extrémité supérieure (21, 21'), et
- -deux dispositifs (3, 25') de fermeture du corps creux (2, 2'), l'un des deux dispositifs de fermeture étant fixé à l'extrémité inférieure (22, 22') du corps et l'autre dispositif à l'extrémité supérieure (21, 21') du corps,
chaque dispositif de fermeture (3, 25') étant configuré pour obturer au moins partiellement l'extrémité du corps creux (2, 2') tout en présentant une ouverture (5, 26') autorisant le passage dudit support d'élevage au travers de ce dispositif de fermeture et étant configuré pour permettre le centrage du corps creux (2, 2') par rapport à ce support d'élevage et le maintien de ce centrage,
ledit corps creux (2, 2') et les deux dispositifs de fermeture (3, 25') étant réalisés en matière plastique semi-rigide,
adite cage étant **caractérisée en ce qu'**au moins l'un de ces dispositifs de fermeture comprend un couvercle (3) muni de découpes (35) qui s'étendent radialement depuis son centre, de façon à former une pluralité de languettes (36) déformables, ces languettes (36) pouvant se déformer pour autoriser le passage du support d'élevage et pour pouvoir se plaquer contre celui-ci sur au moins une partie de leur longueur, afin d'assurer le centrage du corps creux (2) par rapport audit support d'élevage et le maintien de ce centrage.

2. Cage de protection (1) selon la revendication 1, **caractérisée en ce que** le couvercle (3) comprend une plaque (31) munie sur sa périphérie d'une pluralité d'orifices (33) permettant le passage de liens de fixation (34) dudit couvercle sur l'extrémité inférieure (22) et/ou l'extrémité supérieure (21) du corps (2).

3. Cage de protection (1) selon la revendication 1 ou 2, **caractérisée en ce que** l'extrémité supérieure et/ou l'extrémité inférieure du corps creux est munie ou sont munies de découpes formant des rabats (25') et **en ce que** ledit dispositif de fermeture est formé de ces rabats (25') qui sont repliés vers l'intérieur du corps (2') et maintenus en position repliée par des liens (4), les rabats (25') étant dimensionnés et configurés pour qu'une fois repliés, ils ménagent entre eux une ouverture (26') qui autorise le passage dudit support d'élevage et que leurs extrémités libres (27') soient au contact de ce support d'élevage, afin d'assurer le centrage du corps creux par rapport audit support d'élevage.

4. Cage de protection (1) selon l'une quelconque des revendications précédentes, **caractérisée en ce que** le corps creux (2, 2') est de section transversale carrée et présente quatre parois latérales (23, 23').

5. Cage de protection (1) selon la revendication 4, **caractérisée en ce que** chaque paroi latérale (23, 23') présente une largeur comprise entre 35 cm et 45 cm, de préférence égale à 40 cm.

6. Cage de protection (1) selon l'une quelconque des revendications précédentes, **caractérisée en ce que** les mailles (20, 20') du corps (2, 2') sont en forme de losange ou de carré dont l'une des diagonales (D1) présente une longueur comprise entre 14 mm et 40 mm et dont l'autre diagonale (D2) présente une longueur comprise entre 14 mm et 40 mm.

7. Cage de protection (1) selon l'une quelconque des revendications précédentes, **caractérisée en ce qu'**elle est munie d'au moins une poignée de préhension (24, 24').

8. Cage de protection (1) selon l'une quelconque des revendications précédentes, **caractérisée en ce que** la matière plastique semi-rigide est un matériau à mémoire de forme.

9. Cage de protection (1) selon l'une quelconque des revendications précédentes, **caractérisée en ce que** la matière plastique semi-rigide est du polyéthylène haute densité.

## Patentansprüche

1. Käfig (1) zum Schutz vor Räubern von Schalentieren, der ausgelegt ist, um auf einem Träger zur Aufzucht von Schalentieren wie ein Pfahl, ein Seil oder einer Langline angeordnet zu sein, wobei diese Schalentiere insbesondere Muscheln sind, **dadurch gekennzeichnet, dass** er umfasst:
- einen länglichen Hohlkörper (2, 2') mit Gitterstruktur, die Öffnungen wie Maschen (20, 20') begrenzt, deren Abmessungen ausgelegt sind, um die Raubhandlung der Raubtiere zu verhindern, wobei dieser Hohlkörper (2, 2') an seinen beiden gegenüberliegenden Enden, die jeweils als unteres Ende (22, 22') und oberes Ende (21, 21') bezeichnet werden, offen ist, und
- zwei Verschlussvorrichtungen (3, 25') des Hohlkörpers (2, 2'), wobei eine der beiden Verschlussvorrichtungen am unteren Ende (22, 22') des Körpers und die andere Vorrichtung am oberen Ende (21, 21') des Körpers befestigt ist,
wobei jede Verschlussvorrichtung (3, 25') ausgelegt ist, um das Ende des Hohlkörpers (2, 2') zumindest teilweise zu verschließen und gleichzeitig eine Öffnung (5, 26') aufweist, die den Durchgang des Aufzuchtträgers durch diese Verschlussvorrichtung erlaubt, und ausgelegt ist, um die Zentrierung des Hohlkörpers (2, 2') in Bezug auf diesen Aufzuchtträger und die Aufrechterhaltung dieser Zentrierung zu ermöglichen,
wobei der Hohlkörper (2, 2') und die beiden Verschlussvorrichtungen (3, 25') aus halbstarrem Kunststoffmaterial hergestellt sind,
wobei der Käfig **dadurch gekennzeichnet ist, dass** mindestens eine dieser Verschlussvorrichtungen einen Deckel (3) umfasst, der mit Ausschnitten (35) versehen ist, die sich ab seinem Zentrum derart radial erstrecken, dass sie eine Vielzahl verformbarer Zungen (36) bilden, wobei sich diese Zungen (36) verformen können, um den Durchgang des Aufzuchtträgers zu erlauben und um sich über mindestens einen Teil ihrer Länge an diesen anlegen zu können, um die Zentrierung des Hohlkörpers (2) in Bezug auf den Aufzuchtträger und die Aufrechterhaltung dieser Zentrierung zu gewährleisten.

2. Schutzkäfig (1) nach Anspruch 1, **dadurch gekennzeichnet, dass** der Deckel (3) eine Platte (31) umfasst, die an ihrem Umfang mit einer Vielzahl von Öffnungen (33) versehen ist, die den Durchgang von Befestigungsbändern (34) des Deckels am unteren Ende (22) und/oder am oberen Ende (21) des Körpers (2) gestatten.

3. Schutzkäfig (1) nach Anspruch 1 oder 2, **dadurch gekennzeichnet, dass** das obere Ende und/oder das untere Ende des Hohlkörpers mit Ausschnitten versehen ist oder sind, die Klappen (25') bilden, und dass die Verschlussvorrichtung aus diesen Klappen (25') gebildet ist, die zum Inneren des Körpers (2') hin umgeschlagen sind und durch Bänder (4) in umgeschlagener Position gehalten werden, wobei die Klappen (25') derart dimensioniert und ausgelegt sind, dass sie, wenn sie umgeschlagen sind, zwischen sich eine Öffnung (26') bilden, die den Durchgang des Aufzuchtträgers erlaubt, und dass ihre freien Enden (27') mit diesem Aufzuchtträger in Kontakt sind, um die Zentrierung des Hohlkörpers in Bezug auf den Aufzuchtträger zu gewährleisten.

4. Schutzkäfig (1) nach einem der vorhergehenden Ansprüche, **dadurch gekennzeichnet, dass** der Hohlkörper (2, 2') einen quadratischen Querschnitt hat und vier Seitenwände (23, 23') aufweist.

5. Schutzkäfig (1) nach Anspruch 4, **dadurch gekennzeichnet, dass** jede Seitenwand (23, 23') eine Breite zwischen 35 cm und 45 cm, vorzugsweise von gleich 40 cm, aufweist.

6. Schutzkäfig (1) nach einem der vorhergehenden Ansprüche, **dadurch gekennzeichnet, dass** die Maschen (20, 20') des Körpers (2, 2') rautenförmig oder quadratisch sind, wobei eine der Diagonalen (D1) eine Länge zwischen 14 mm und 40 mm aufweist und die andere Diagonale (D2) eine Länge zwischen 14 mm und 40 mm aufweist.

7. Schutzkäfig (1) nach einem der vorhergehenden Ansprüche, **dadurch gekennzeichnet, dass** er mit mindestens einem Haltegriff (24, 24') versehen ist.

8. Schutzkäfig (1) nach einem der vorhergehenden Ansprüche, **dadurch gekennzeichnet, dass** das halbstarre Kunststoffmaterial ein Material mit Formgedächtnis ist.

9. Schutzkäfig (1) nach einem der vorhergehenden Ansprüche, **dadurch gekennzeichnet, dass** das halbstarre Kunststoffmaterial hochdichtes Polyethylen ist.

## Claims

1. Protective cage (1) for protection against shellfish predators, configured to be arranged on a shellfish rearing support, such a stake, a rope or a longline, these shellfish being in particular mussels, **characterized in** it comprises:
- a hollow, elongated body (2, 2') with a lattice structure defining openings, such as meshes (20, 20'), the dimensions of which are configured to prevent the predatory action of the said predators, this hollow body (2, 2') being open at its two opposite ends, known respectively as the lower end (22, 22') and the upper end (21, 21'), and
- two devices (3, 25') for closing the hollow body (2, 2'), one of the two closing devices being fixed to lower end (22, 22') of the body and the other device to the upper end (21, 21') of the body,
each closure device (3, 25') being configured to at least partially close off the end of the hollow body (2, 2') while presenting an opening (5, 26') allowing the passage of the said rearing medium through this closure device and being configured to enable the hollow body (2, 2') to be centered with respect to this support and maintaining this centering,
said hollow body (2, 2') and the two closing devices (3, 25') being made of semi-rigid plastic,
said cage being **characterized in** at least one of said closing devices comprises a cover (3) provided with cut-outs (35) extending radially from its center, so as to form a plurality of deformable tongues (36), these tongues (36) being able to deform to allow the rearing support to pass through and to be able to press against it over at least part of their length, in order to ensure that the hollow body (2) is centered with respect to the said rearing support and that this centering is maintained.

2. Protective cage (1) as claimed in claim 1, **characterized in that** the cover (3) comprises a plate (31) provided on its periphery a plurality of orifices (33) allowing the passage of fasteners (34) for attaching said cover to lower end (22) and/or the upper end (21) of the body (2).

3. Protective cage (1) according to Claim 1 or 2, **characterized in that** the upper end and/or the lower end of the hollow body is or are provided with cut-outs forming flaps (25') and **in that** the said closure device is formed by these flaps (25') which are folded towards inside of the body (2') and held in position folded by ties (4), the flaps (25') being dimensioned and configured so that once folded, they form an opening (26') between them which allows the said rearing support to pass through and that their free ends (27') are in contact with this rearing support, in order to ensure the centering of the hollow body with respect to the said rearing support.

4. Protective cage (1) according to any one of the preceding claims, **characterized in that** the hollow body (2, 2') is square in cross-section and has four side walls (23, 23').

5. Protective cage (1) according to claim 4, **characterized in that** each side wall (23, 23') has a width of between 35 cm and 45 cm, preferably equal to 40 cm.

6. Protective cage (1) according to any one of the preceding claims, **characterized in that** the meshes (20, 20') of the body (2, 2') are diamond- or square-shaped, one diagonal (D1) of which has a length of between 14 mm and 40 mm and the other diagonal (D2) of which has a length of between 14 mm and 40 mm.

7. Protective cage (1) according to any one of the preceding claims, **characterized in that** it is provided at least one gripping handle (24, 24').

8. Protective cage (1) according to any one of the preceding claims, **characterized in that** the semi-rigid plastic material is a shape memory material.

9. Protective cage (1) according to any one of the preceding claims, **characterized in that** the semi-rigid plastic material is high density polyethylene.
